(19) Europäisches Patentamt
European Patent Office
Office européen des brevets

(11) Publication number: **0 180 563**
**A2**

(12) # EUROPEAN PATENT APPLICATION

(21) Application number: **85850321.2**

(51) Int. Cl.⁴: **B 01 J 20/32**, G 01 N 30/48

(22) Date of filing: **11.10.85**

(30) Priority: **30.10.84 SE 8405431**

(43) Date of publication of application: **07.05.86**
**Bulletin 86/19**

(84) Designated Contracting States: **DE FR GB**

(71) Applicant: **Exploaterings AB T.B.F., Box 1203, S-75142 Uppsala (SE)**

(72) Inventor: **Porath, Jerker, Bodalsvägen 4, S-18136 Lidingö (SE)**
Inventor: **Belew, Makonnen, Studentstaden 18, S-75233 Uppsala (SE)**

(74) Representative: **Rosenquist, Holger et al, H Albihns Patentbyra AB Box 7664, S-103 94 Stockholm (SE)**

(54) **An amphiphathic gel-product for chromatographic and batchwise adsorption.**

(57) An amphipathic gel according to the invention is characterized in that a hydrophobic group is coupled to a hydrophilic gel through a bridge which comprises thio-ether-sulphur. The gel may be a cross-linked polysaccharide, a polyacrylic acid derivative or an inorganic substance, such as silica gel or glass or a derivative thereof, and the hydrophobic group may comprise, in addition to the thio-ether-sulphur, alkyl, alkenyl, cycloalkenyl, alkaryl, aralkyl, heteroaryl, alkheteroalkyl, and unsubstituted or substituted with electrically neutral substituents.

The gel is prepared by introducing an oxirane group or thiosulphate group into a hydrophilic gel and subsequently bringing the gel into contact with a hydrophobic mercaptan in an alkaline solution.

The gel according to the invention can be used for the adsorption and desorption of amphipathic substances, and affords better separation than earlier similar products in which the hydrophobic ligand is bound to the hydrophilic gel over an oxygen bridge.

EP 0 180 563 A2

An amphipatnic gel-product for chromatographic and batchwise adsorption

The present invention relates to a gel-product for chromatographic and batchwise adsorption, and to a method for its manufacture, and to its use.

The gel-product according to the invention is characterized by a hydrophilic gel matrix which is substituted with electrically neutral hydrophobic ligand groups via a spacer and a thio-ether atom. The product differs from earlier, similar adsorbents through the thio-ether atom and its closest molecular environment. The absorbent can be characterized schematically as follows:

Gel matrix - spacer chain - S - ligand (I)

The invention differs from the prior art disclosure in Swedish Patent Specification 7304148-5 as a result of the thio-ether bridge linking the ligands.

The gel product according to the invention is made superior to other similar known products through at least two advantageous product characteristics and improved manufacture.

When the ligands contain no other characteristic element than carbon, hydrogen and oxygen, it is difficult to assay the degree of substitution, i.e. the ligand concentration of the gel or the gel matrix. With the same composition in general, the presence of the thio-ether atom enables the ligand concentration to be determined directly by sulphur analysis, provided that the sulphur atom is derived from a reagent common to the ligand in the synthesis according to the invention. Even if matrix and spacer contain sulphur, there can be obtained at least an appreciation of the

ligand concentration from the differences in sulphur content prior and subsequent the synthesis of the gel absorbent.

The improved adsorption properties of the gel according to the invention compared with other similar adsorbents lacking thio-ether characteristics are illustrated in more detail hereinafter.

The molecular environment of the thio-ether atom has the schematic structure:

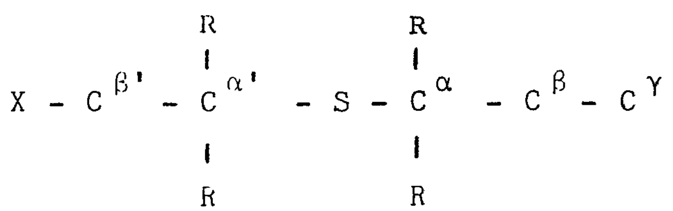 (II)

where R is preferably hydrogen; α , β and γ are included in the ligand and α ', β' and X in the spacer chain and/or in the matrix polymer. It is obvious that R may also be an alkyl, for example methyl, without affecting the characteristic adsorption other than perhaps to enhance the same. The carbon atoms β and β' may also be R-substituted, or bound to other substituents with oxygen, keto-oxygen, hydroxyl, carboxy alkyl, and halogen. β and γ may be incorporated in an aromatic or heteroaromatic ring. One or more sulphur atoms may be inserted between the gel matrix and the structure of formula II, although such insertion renders determination of the ligand concentration more difficult.

The hydrophilic gel may comprise an insoluble polysaccharide whose gel structure in water is contingent on the presence of cross-links between the polysaccharide chains, created by hydrogen links, such as in the case of cellulose, starch and agar, or by covalently bound cross-links.

The gel matrix may also comprise a synthetic hydroxyl polymer, for example cross-linked polyvinyl alcohol or an hydroxy derivative of cross-linked polyacryl amide. Thus, nonhydroxyl-containing, cross-linked hydrophilic polymers based, for example, on polyacryl amide or polyacryl esters also constitute starting products for the manufacture of an adsorbent according to the invention. Silica gel and glass, particularly such inorganic materials substituted with hydrophilic organic groups, e.g. glycerol, may also constitute the starting material for different variants. A common criterion of all gel matrices is that they should not contain fixated ions or ionogenic groups in concentrations which will greatly alter the nature of the adsorption. Because the adsorption suitably takes place in the presence of a high salt concentration, it is possible to suppress ion-exchange adsorption. Desorption, however, is incomplete when the absorbent contains immobilized ion groups, and hence the gel matrix should be electrically neutral, or at least substantially so. The permitted limit in respect of the number of electrically charged groups present is fluid, although a guideline with regard to an upper limit is 50 micromoles of ion groups for each gram of bone-dry gel matrix. Gel matrices with lower ion-group concentrations are considered to be "uncharged", electrically neutral. Through this definition, the invention will thus also embrace cellulose, starch, agarose, and other aforesaid matrices.

The spacer chain according to the invention should contain at least three atoms in a row, and examples of spacer arms are given below (with the bond to thio-ether sulphur on the right):

$-O-CH_2-CHOH-CH_2-$ (IIIA)

$-O-CH_2-CHOH-CH_2-O-CH_2-CHOH-CH_2-$ (IIIB)

$-O-CH_2-CHOH-CH_2-O-(CH_2)_n-O-CH_2-CHOH-CH_2-$ (IIIC)

where $n > 2$

$-O-CH_2-CO-CH_2$ (IIID)

$-O-(CH_2)_n-$ where $n > 3$ (IIIE)

In an extreme case, the spacer may comprise a methylene group connected directly to the polymer chain or incorporated therein, e.g. deflected from the 6-hydroxy methylene group in a polygalactose or polyglucose.

The ligand is chosen so that the adsorbent according to the invention will function as an amphipathic or hydrophobic adsorbent for substances that contain hydrophobic groups. In principle, the ligand may be any electrically neutral group whatsoever provided that it falls within the structure requirement in formula II. Examples of ligand structures according to the invention are alkyl, alkenyl, alkaryl, and alkheteroaryl with or without electrically neutral substituents. Suitable ligands according to the invention are $C_nH_{2n+1}$, where preferably $3 < n < 12$. Ligands in which n = 6, 7, 8, 9, or 10 are particularly useful for protein adsorption.

The product according to the invention can be produced in various ways, which can be grouped under two fundamentally different methodology classifications:

A. A thiol group is introduced into the gel, whereafter

the ligand is coupled through an atom or atom group which reacts with the thiol:

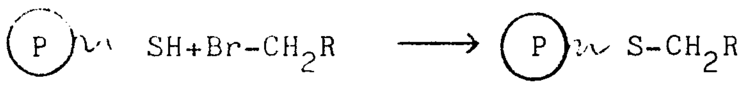
(IV)

One disadvantage with this method is the difficulty in controlling the synthesis. Firstly, the halogen is not readily dissolved in water, and secondly it is not possible to determine the degree of substitution with regard to R with the aid of sulphur assaying techniques.

B. The reactive atom or atom group is frist introduced into the gel, which is then reacted with a thiol-containing ligand substance:

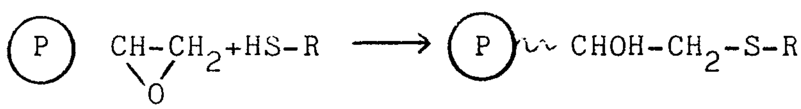
(V:1)

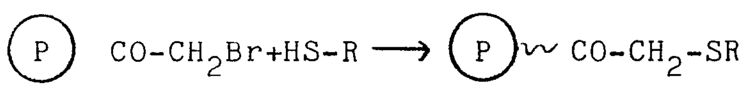
(V:2)

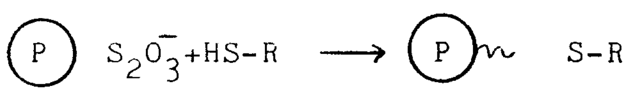
(V:3)

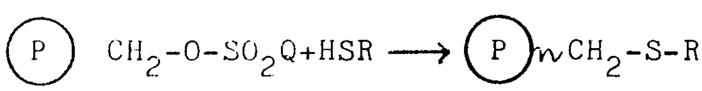
(V:4)

where Q is aryl, alkyl, tosylfluoromethyl or trifluoromethyl.

V:3 and V:4 provide a high yield, although any surplus thiosulphate and sulphonate must be isolated with another sterile, less prohibiting thiol compound, and consequently there is obtained a higher sulphur concentration than that corresponded by the ligand concentration.

When desiring a long spacer and a relatively high ligand concentration, it may be suitable to introduce the ligand through a series of reactions, in which a thiol group is first introduced into the gel, e.g.

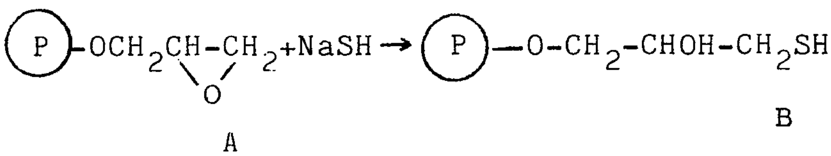 (VI)

A B B

B is reacted with a long chain bis-oxirane

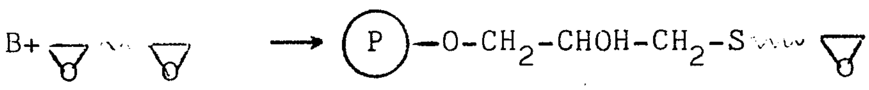 (VII)

C

C is reacted thereupon with the thio-containing ligand substance, optionally subsequent to having first been converted to thiosulphate gel. The advantage gained hereby is that it is easier to obtain a highly substituted oxirane product according to A, than when reacting the gel direct with bis-oxirane. The secondary reactions should also have a less disturbing effect on the properties of the product as an absorbent. Since thiol groups react with oxirane groups more readily than do hydroxyl groups, the reaction of B with the bis-oxirane can be effected under milder conditions, i.e. lower pH where the competition between reactions with the hydroxyl groups in the gel matrix are negligible.

One decisive advantage afforded by the use of thio-containing ligand substances, is that such substances are far more soluble in alkali than corresponding halogen compounds.

The invention will now be described in more detail with

reference to a number of working examples of mutually different syntheses.

Example 1.

10 grams of agarose gel which had been dried by suction and had a 6% matrix content, i.e. 94% water and 6% agarose, were mixed with 10 ml of 0.6 M NaOH, 20 mg of sodium borhydride, and 5 ml of butane dioldiglycidyl ether in a round-necked flask. The suspension was shaken gently overnight. The gel was washed with distilled water and returned to the round-necked flask. 8 ml of 1 M NaOH were added, together with 10 mg of sodium borhydride and 8 ml of a 100 micromolar octylmercaptan solution in 95 % ethanol. The product was subsequently agitated for 20 hrs at room temperature and then transferred to a Büchner funnel and washed with water whereafter the product was ready for use. A sample of the gel was dried and analysed in respect of its sulphur content, which was found to be seven micromoles per gram of dry gel.

Example 2.

In a manner similar to that described in Example 1, 10 grams of agarose gel were activated with butane diol-bis--glycidyl ether. The oxirane gel was treated at room temperature with 10 micromoles benzylmercaptan in 40% ethanol in the presence of 20 mg sodium borhydride. The product was worked-up in the same manner as that recited in Example 1 and was found to contain six micromoles of sulphur for each gram of gel.

The gel product according to the invention adsorbs proteins at low salt concentrations. In addition, and in conformity with the characteristic nature of amphipathic gels

(containing both hydrophobic and hydrophilic groups), adsorption of amphiphatic substances present in the surrounding solution, such as proteins for example, increases with increased salt concentration, which also applies to thio-ether gels according to the invention. The following examples are given in order to illustrate the particular characteristics of the gel product manifested by the differences between the adsorption conditions of the gel produced in accordance with the invention and corresponding conventional gels, for example the gel described in Swedish Patent Application No. 7304148-5.

Example 3.

Octyl-S-agarose and octyl-O-agarose (i.e. a gel in which the octyl group is bonded to the matrix through an oxygen atom) were each packed into a respective column tube having a volumetric capacity of 8 ml. The gels were washed with 0.1 M Tris-HCl, pH 7.6, containing 0.5 M $K_2SO_4$. One millilitre (human serum dialysed against the washing buffer) was introduced into each of the columns and then washed with 80 ml washing buffer. Protein elution was obtained by washing the gel beds with 0.1 M Tris-HCl, pH 7.6, thus by excluding $K_2SO_4$. Additional protein was then eluated, by washing with a mixture of the tris buffer and 30% ethylene glycol. A small residual quantity of protein was finally eluted with a mixture of tris buffer and 30%-isopropanol.

Gel electrophoresis of the eluate showed that serum albumin had adsorbed on the columns in both instances. Distinct from the results obtained with the octyl-O-agarose, the actyl-S-agarose provided a pure serum albumin when eluting with the buffer containing ethylene glycol. Remaining fractions also contained a purer albumin in the case of the octyl-S-agarose.

Example 4.

Two tests were carried out in a similar manner to Example 3, although with the difference that 4 ml serum were introduced into the beds. When analysing non-adsorbed material that had thus passed through the beds, it was found that the capacity of octyl-S-agarose at room temperature was about three times that of the corresponding octyl-O-agarose.

Example 5.

Two tests were carried out in a manner similar to Example 4, but with the difference that the temperature was held at 4°C. In this case it was found that the adsorption capacity of the octyl-S-agarose was higher and the capacity of the octyl-O-agarose lower, which clearly shows that the adsorption processes had different characteristics.

Example 6.

A series of tests were carried out in a manner analogous with Example 3 with alkyl-S-agaroses of differing chain lengths, $C_4$, $C_6$, $C_8$, $C_{10}$, $C_{12}$, $C_{16}$ and $C_{18}$, and substantially the same degree of substitution, with about 4 micromoles alkyl per gram of dry gel substance. Evaluation of the electrophoretrogram obtained with separate eluates showed that the $C_8$-gel possessed the best properties with regard to the possibility of obtaining practically pure serum albumin in a practical operation, elution with a buffer containing ethylene glycol. The

remaining gels exhibited varying affinity to other serum proteins, although all were found to have a strong adsorption affinity to serum albumin.

Example 7.

A test was carried out with octyl-S-agarose, in which the gel had been prepared through epichlorohydrine activation in accordance with Example 8. A comparison made between the gel electrophoretrograms of respective eluates showed that the two gels functioned equally, although certain differences in the pattern regarding those proteins which are present in smaller quantities could nevertheless be established.

The length of the spacer chain also has a certain influence on the adsorption and desorption properties, as made evident in Example 8 below.

Example 8.

An octyl-S-agarose was prepared in accordance with Example 1, together with a corresponding gel prepared in an analogous manner, but incorporating an epichlorohydrine spacer builder instead of butandiol-bis-glycidyl ether. Tests were carried out with human serum in the manner described in Example 3. Electrophoretic analysis showed tangible differences in the protein composition in the separate chromatographic fractions, although the adsorption characteristics were in principle the same, i.e. hydrophobic adsorption.

## CLAIMS

1. An amphiphathic gel product for chromatography and batchwise adsorption, characterized in that it comprises a hydrophilic gel to which a hydrophobic group has been coupled through a thio-ether sulphur bridge.

2. A gel product according to Claim 1, characterized in that the hydrophilic gel consists of a cross-linked polysaccharide, preferably agar or agarose.

3. A gel product according to Claim 1, characterized in that the hydrophilic gel consists of a polyacrylic acid derivative.

4. A gel product according to Claim 1, characterized in that the hydrophilic gel consists of silica gel or glass or derivatives thereof.

5. A gel product according to any one of Claims 1-5, characterized in that the hydrophobic ligand has the structure $-S-CR_1R_2-Q$, where $R_1$ and $R_2$ is H or alkyl, and Q is alkyl, alkenyl, cycloalkyl, cycloalkenyl, alkaryl, aralkyl, heteroaryl, alkheteroaryl, with or without electrically neutral substituents.

6. A gel product according to any one of Claims 1-6, characterized in that Q is an alkyl group $C_nH_{2n+1}$, where $4 < n < 18$.

7. A gel product according to any one of Claims 1-6, characterized in that the hydrophobic ligand group with appendant thio-ether-sulphur is separated from the polymer matrix by a spacer which comprises a chain incorporating

at least one methylene group between the thio-ether atom and the oxygen atom linking the spacer to the polymer.

8. A method for producing an amphipathic gel product according to any one of Claims 1-7, characterized by introducing an oxirane group or thiosulphate group into a hydrophilic gel; and bringing the gel into contact with a hydrophobic mercaptan in an alkaline solution.

9. The use of a gel product according to any one of Claims 1-7 for separating amphipathic substances containing hydrophilic groups, such as OH, $NH_2$, COOH, and hydrophobic groups, such as alkyl, cycloalkyl, phenyl, indyl, characterized in that the amphipathic substances are adsorbed on a gel product according to any of Claims 1-7 at a salt concentration which at least corresponds to 1 M aqueous solution of sodium chloride and desorption is effected by lowering the salt concentration and/or by changing the pH, or by lowering the polarity of the solvent, for example by mixing the aqueous solution with an organic solvent having a lower polarity than water.